# EUROPEAN PATENT SPECIFICATION

(11) **EP 3 046 042 B1**
(45) Date of publication and mention of the grant of the patent: **04.03.2020**
(21) Application number: 16151113.4
(22) Date of filing: 13.01.2016
(51) Int. Cl.: G06F 21/32, G06F 3/05, G06F 3/041, G06F 3/044, G06K 9/00

(54) **APPARATUS FOR IMPLEMENTING HOME BUTTON AND FINGERPRINT IDENTIFICATION ON SINGLE SENSOR**
VORRICHTUNG ZUR IMPLEMENTIERUNG VON HOME TASTEN UND FINGERABDRUCKIDENTIFIZIERUNG DURCH GEMENSAIMEN SENSOR
APPAREIL POUR METTRE EN OEUVRE TOUCHE HOME ET IDENTIFICATION D'EMPREINTES DIGITALES AVEC UN SEUL CAPTEUR

(30) Priority: 13.01.2015 CN 201510017101; 08.06.2015 CN 201510312143
(43) Date of publication of application: 20.07.2016
(73) Proprietor: Xiaomi Inc., Beijing 100085 (CN)
(72) Inventor: JIANG, Zhongsheng, 100085 BEIJING (CN); YANG, Kun, 100085 BEIJING (CN); TAO, Jun, 100085 BEIJING (CN)
(74) Representative: Cabinet Beau de Loménie

(56) References cited:
- EP-A1- 3 043 246
- CN-A- 104 732 201
- US-A1- 2012 105 081
- US-A1- 2013 287 274
- US-A1- 2014 341 447
- US-A1- 2015 185 954

## Description

### TECHNICAL FIELD

The present disclosure relates to fields of electronic devices, and more particularly, to an apparatus for implementing functions of touch screen and fingerprint identification, and a terminal device.

### BACKGROUND

With the increasing number of functions that terminal devices such as mobile phones perform, more convenience is provided to users by those new functions of terminal devices.

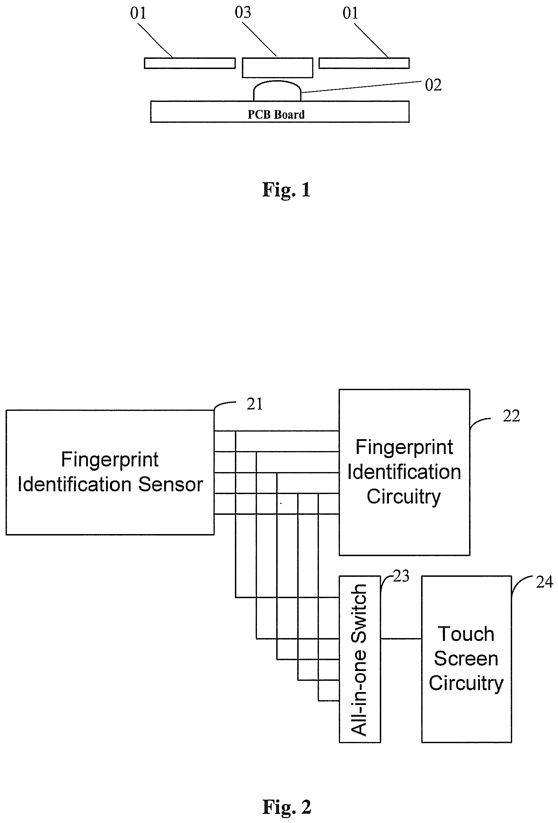

All major manufacturers of terminal devices have tended to pay attention to the function of fingerprint identification recently. In conventional terminal devices such as mobile phones, tablet computers, the function of fingerprint identification to be designed is generally combined with adoption of a physical button, a section view of which is shown in Fig. 1, so as to implement compatible functions of button and fingerprint identification. Generally with such a design, an opening needs to be formed correspondingly in an area of fingerprint identification on a cover glass 01, since a physical button 02 is activated only through a certain travel of press. In this way, when a fingerprint identification sensor 03 is tapped by a user, only a fingerprint may be identified by the system; while when the fingerprint identification sensor 03 is pressed through a certain travel by the user, the physical button 02 may be activated, and two actions including finger-print and button-press may be identified by the system and a corresponding action may be extracted according to needs of an upper-level. However, exterior appearance of the terminal device as a whole is limited by the structure described
above, and so is convenience of user operation.

US2010/0105081A1 and US2014/0341447A1 disclose sensor circuitries implementing a dual function of fingerprint sensor and touch button.

### SUMMARY

In order to overcome problems existing in related art, there are provided an apparatus for implementing functions of touch screen and fingerprint identification, and a terminal device, according to embodiments of the present disclosure, so as to improve integration level of the terminal device. The invention is defined by the independent appended claims. Particular embodiments are further defined in the dependent claims.

According to a first aspect of embodiments of the present disclosure, there is provided an apparatus for implementing functions of touch screen and fingerprint identification. The apparatus includes: a fingerprint identification sensor, a fingerprint identification circuitry, an all-in-one switch and a touch screen circuitry; the fingerprint identification sensor includes a plurality of sub-sensors;
the plurality of sub-sensors are respectively connected with the fingerprint identification circuitry, and respectively connected with the all-in-one switch; the all-in-one switch is connected with the touch screen circuitry;
the fingerprint identification sensor is provided below a cover glass and in occupation of a portion of a lower region of the touch screen, and is configured, when the all-in-one switch is opened (it forms an open circuit), to transmit a signal generated by a detection by the plurality of sub-sensors to the fingerprint identification circuitry, respectively, and when the all-in-one switch is closed (it forms a closed circuit), to combine the signal generated by a detection by the plurality of sub-sensors into touch signal through the all-in-one switch and transmit the touch signal to the touch screen circuitry;
the fingerprint identification circuitry is configured to process the signal generated by a detection by the plurality of sub-sensors; and
the touch screen circuitry is configured to determine presence of a touch operation according to the combined touch signal.

It should be noted that the all-in-one switch also can be called "all-in-one controlling switch" by the skilled person, and that it is a switch which combines multiple traces into one trace.

In a particular embodiment, the all-in-one switch is opened or closed according to instructions from a host in a terminal device.

In a particular embodiment, the fingerprint identification sensor is formed of metallic nano-wire or carbon nano-tube material.

In a particular embodiment, the plurality of sub-sensors are arranged in a dot matrix or in a rectangular matrix.

In a particular embodiment, the fingerprint identification circuitry includes:
a signal processing sub-module configured to convert the signal generated by a detection by the plurality of sub-sensors into digital signal and transmit the digital signal to a host in a terminal device.

In a particular embodiment, the fingerprint identification circuitry includes:
an image generation sub-module configured to create a fingerprint image based on the signal generated by a detection by the plurality of sub-sensors and transmit the fingerprint image to a host in a terminal device.

In a particular embodiment, the fingerprint identification circuitry includes:
a comparison sub-module configured to create a fingerprint image based on the signal generated by a detection by the plurality of sub-sensors, compare the fingerprint image with a sample image and transmit a comparison result to a host in a terminal device.

In a particular embodiment, the touch screen circuitry includes:
a determination sub-module configured to determine presence of the touch operation according to the combined touch signal and transmit a determination result to a host in a terminal device.

According to a second aspect of embodiments of the present disclosure, there is provided a terminal device. The terminal device includes any one of the apparatuses for implementing functions of touch screen and fingerprint identification described above.

Technical solution according to embodiments of the present disclosure may provide, at least in part, following advantageous effects. Functions of fingerprint identification and touch screen are implemented by a commonly used fingerprint identification sensor. External components for implementing the functions of fingerprint identification and touch screen are integrated into one component, so that integration level of the electronic device is improved. Accordingly, compatible functions of capacitive touch and fingerprint identification can be enabled simultaneously, and convenience of user operations as well as user experience can be improved.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating a section view of a touch screen in a conventional terminal device.
Fig. 2 is a block diagram illustrating an apparatus for implementing functions of touch screen and fingerprint identification, according to an exemplary embodiment.
Fig. 3 is a block diagram illustrating a position of the apparatus for implementing functions of touch screen and fingerprint identification, according to an exemplary embodiment, on a display region of the touch screen.
Fig. 4 is a block diagram illustrating a fingerprint identification framework with sub-sensors arranged in a dot matrix, according to an exemplary embodiment.
Fig. 5 is a block diagram illustrating a fingerprint identification framework with sub-sensors arranged in a rectangular matrix, according to an exemplary embodiment.
Fig. 6 is a block diagram illustrating an apparatus for implementing functions of touch screen and fingerprint identification, according to an exemplary embodiment.
Fig. 7 is a block diagram illustrating a device for implementing functions of touch screen and fingerprint identification applicable in a terminal device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Fig. 2 is a block diagram illustrating an apparatus for implementing functions of touch screen and fingerprint identification, according to an exemplary embodiment. As shown in Fig. 2, the apparatus includes a fingerprint identification sensor 21, a fingerprint identification circuitry 22, an all-in-one switch 23 and a touch screen circuitry 24, wherein the fingerprint identification sensor 21 includes a plurality of sub-sensors.

The plurality of sub-sensors are connected with the fingerprint identification circuitry 22, respectively, and connected with the all-in-one switch 23, respectively. The all-in-one switch 23 is connected with the touch screen circuitry 24.

The fingerprint identification sensor 21 is provided below a cover glass and in occupation of a portion of a lower region of the touch screen, and is configured, when the all-in-one switch 23 is opened, to transmit signal generated by a detection by the plurality of sub-sensors to the fingerprint identification circuitry 22, respectively, and when the all-in-one switch 23 is closed, to combine the signal generated by a detection by the plurality of sub-sensors into touch signal through the all-in-one switch 23 and transmit the touch signal to the touch screen circuitry 24.

The fingerprint identification circuitry 22 is configured to process the signal generated by a detection by the plurality of sub-sensors.

The touch screen circuitry 24 is configured to determine presence of a touch operation according to the combined touch signal.

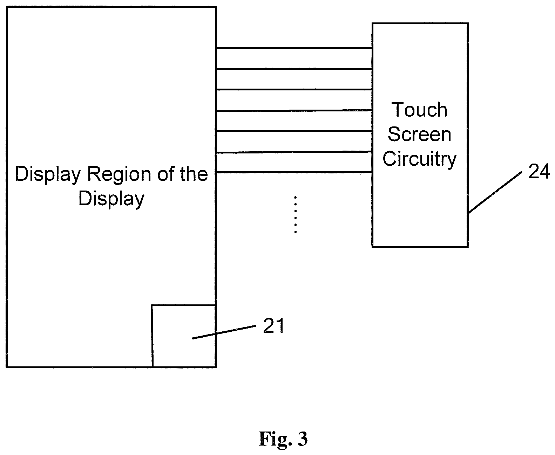

In the embodiment, the fingerprint identification sensor 21 is provided below the cover glass and in occupation of a portion of the lower region of the touch screen, as shown in Fig. 3. In the display region of the touch screen, the fingerprint identification sensor 21 for implementing compatible functions of fingerprint identification and touch screen may be provided within a space at lower right region of the touch screen.

In an embodiment, the fingerprint identification sensor 21 is formed of metallic nano-wire or carbon nano-tube material. As the fingerprint identification sensor 21 is provided in occupation of a portion of the lower region of the touch screen, in view of optical effects as well as strict requirements of fingerprint identification on line width and line spacing of sensors, the fingerprint identification sensor 21 may be provided with an effect similar to transparency, and may be formed of materials such as metallic nano-wire, carbon nano-tube or the like such that capacitive touch and fingerprint identification may be scanned in a manner of time division.

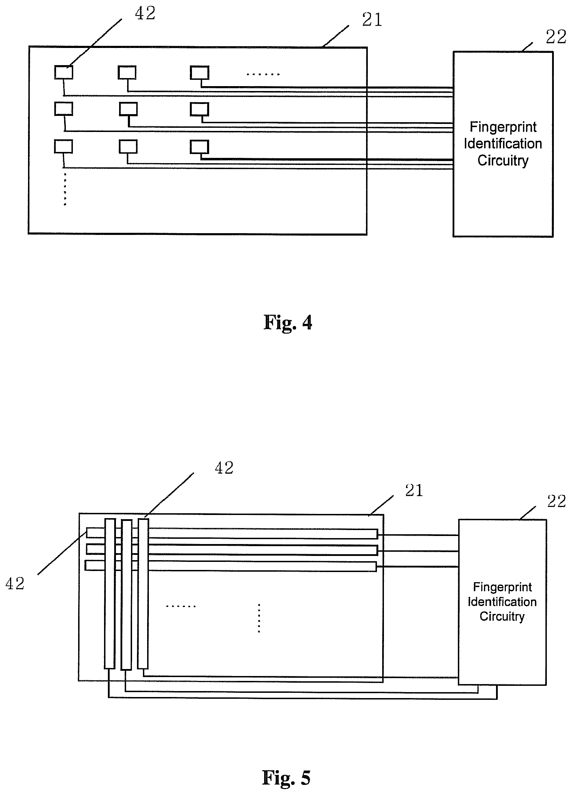

In an embodiment, as shown in Figs. 4 and 5, the plurality of sub-sensors are arranged in a dot matrix or in a rectangular matrix.

The fingerprint identification sensor is provided thereon with a plurality of sub-sensors 42, which are configured to collect information on various subtle key nodes of a fingerprint. Thus, a fingerprint image may be restored based on the information on those key nodes, and it is determined whether the fingerprint image is consistent with a sample image through a comparison analysis.

Signal indicative of the fingerprint is transmitted to the fingerprint identification circuitry 22 from a matrix of the sub-sensors, either in a dot matrix or in a rectangular matrix, and then is subject to processes including signal filtering, amplification, AD sampling and the like so as to provide a fingerprint identification chip with a sufficient level of digital signal. Accordingly, when the all-in-one switch 23 is opened, the signal generated by a detection by respective sub-sensor 42 is transmitted from the fingerprint identification sensor 21 to the fingerprint identification circuitry 22 so as to implement the function of fingerprint identification. Otherwise, when the all-in-one switch 23 is closed, the signal generated by a detection by respective sub-sensor 42 is combined at the fingerprint identification sensor 21 via the all-in-one switch 23 into touch signal to be transmitted to the touch screen circuitry 24. Thus, signal with sufficient energy level can be provided to the touch screen circuitry 24, and requirements of finger touch on sensitivity, response area and response speed can be enabled also.

### Embodiment I

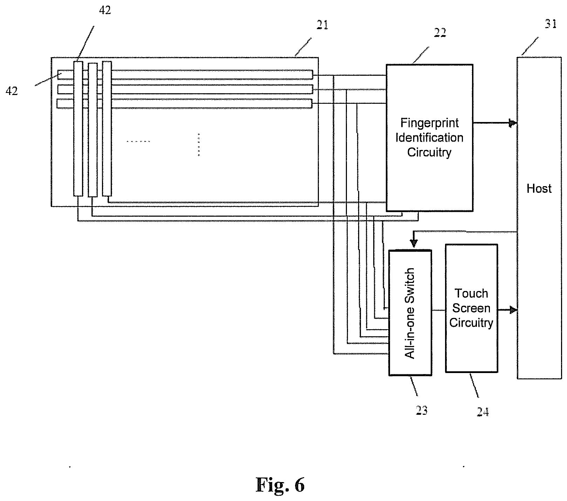

Fig. 6 is a block diagram illustrating an apparatus for implementing functions of touch screen and fingerprint identification, according to an exemplary embodiment. As shown in Fig. 6, the apparatus includes a fingerprint identification sensor 21, a fingerprint identification circuitry 22, an all-in-one switch 23 and a touch screen circuitry 24, wherein the fingerprint identification sensor 21 includes a plurality of sub-sensors 42 which are arranged in a rectangular matrix. As shown in Fig. 4, the plurality of sub-sensors 42 may be also arranged in a dot matrix.

In the present embodiment, compatible functions of fingerprint identification and capacitive touch are implemented by introducing an additional capacitive touch framework via commonly used sensors based on a fingerprint identification framework.

The all-in-one switch 23 is opened or closed according to instruction from a host 31 in the terminal device. When the fingerprint identification requires to be responded, the all-in-one switch 23 is opened, and signal from the respective sub-sensor 42 may be obtained by the fingerprint identification circuitry 22 so as to implement the function of fingerprint identification. Otherwise, when the host 31 is responsive to the function of finger touch, the all-in-one switch 23 is closed, and all of the sub-sensors 42 are combined into a massive sensor through which finger touch signal may be obtained by the touch screen circuitry 24, so as to implement the function of finger touch. According to needs of the host 31 at an upper level, the respective sub-sensors may be combined into the massive sensor in order to provide the touch screen circuitry 24 with sufficient energy level of signal and ensure sensitivity, response area and response speed required by the function of finger touch.

In an embodiment, the fingerprint identification circuitry 22 may include:
a signal processing sub-module configured to convert the signal generated by a detection by the plurality of sub-sensors 42 into digital signal and transmit the digital signal to the host 31 in the terminal device.

For example, the signal generated by a detection by the plurality of sub-sensors 42 may be subject to processes including filtering, amplification, sampling and the like.

In an embodiment, the fingerprint identification circuitry 22 may include:
an image generation sub-module configured to create a fingerprint image based on the signal generated by a detection by the plurality of sub-sensors 42 and transmit the fingerprint image to the host 31 in the terminal device.

In an embodiment, the fingerprint identification circuitry 22 may include:
a comparison sub-module configured to create a fingerprint image based on the signal generated by a detection by the plurality of sub-sensors 42, compare the fingerprint image with a sample image and transmit a comparison result to the host 31 in the terminal device.

In an embodiment, the touch screen circuitry 24 may include:
a determination sub-module configured to determine presence of the touch operation according to the combined touch signal and transmit a determination result to the host 31 in the terminal device.

With technical solution provided by the present disclosure, functions of fingerprint identification and touch screen are implemented by a commonly used fingerprint identification sensor. External components for implementing the functions of fingerprint identification and touch screen are integrated into one component, so that integration level of the electronic device is improved. Accordingly, compatible functions of capacitive touch and fingerprint identification can be enabled simultaneously, and convenience of user operations as well as user experience can be improved.

In the present disclosure, a manner may be adopted where separate ICs (Integrated Circuits) are used for processing signal and sensors are commonly used, as shown in drawings described above. Moreover, a more integrated manner may be adopted also. For example, the all-in-one switch 23 and the touch screen circuitry 24 may be integrated into a same IC, the all-in-one switch 23 and the fingerprint identification circuitry 22 may be integrated into a same IC, and the all-in-one switch 23, the fingerprint identification circuitry 22 and touch screen circuitry 24 may be integrated into a same IC, so as to provide a solution with a higher level of integration.

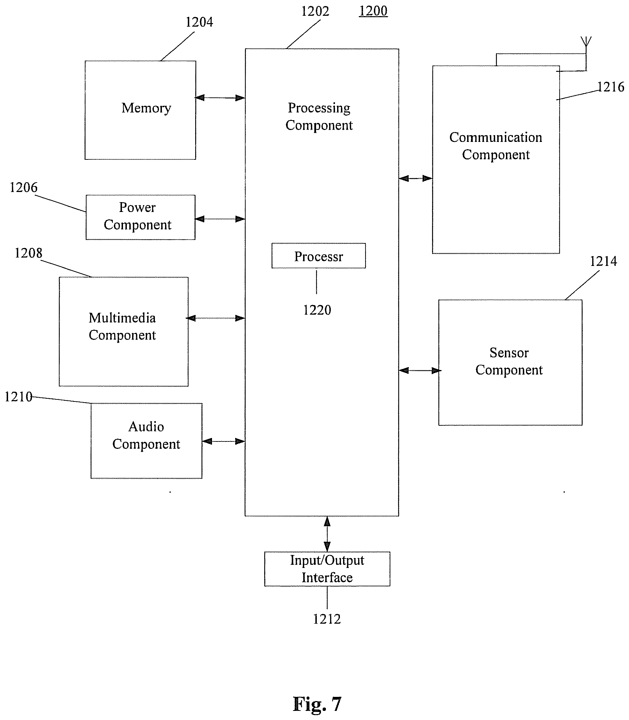

Fig. 7 is a block diagram illustrating a device 1200 for implementing functions of touch screen and fingerprint identification, which is applicable in a terminal device, according to an exemplary embodiment. For example, the device 1200 may be a mobile phone, a computer, a digital broadcast terminal, a messaging device, a gaming console, a tablet device, a medical device, exercise equipment, a personal digital assistant, and the like.

Referring to Fig. 7, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

## Claims

1. An apparatus for implementing functions of touch screen and fingerprint identification, **characterized in that** it comprises: a touchscreen; a fingerprint identification sensor (21), a fingerprint identification circuitry (22), an all-in-one switch (23) and a touch screen circuitry (24), wherein
the fingerprint identification sensor comprises a plurality of sub-sensors (42); the plurality of sub-sensors are respectively connected with the fingerprint identification circuitry , and respectively connected with the all-in-one switch; the all-in-one switch is connected with the touch screen circuitry;
the fingerprint identification sensor is provided below a cover glass and in occupation of a portion of a lower region of the touch screen, and is configured, when the all-in-one switch is opened, to transmit a signal generated by a detection by the plurality of sub-sensors to the fingerprint identification circuitry, respectively, and when the all-in-one switch is closed, to combine the signal generated by a detection by the plurality of sub-sensors into touch signal through the all-in-one switch and transmit the touch signal to the touch screen circuitry, the functions of fingerprint identification and touch screen being implemented by the fingerprint identification sensor;
the fingerprint identification circuitry is configured to process the signal generated by a detection by the plurality of sub-sensors; and
the touch screen circuitry is configured to determine presence of a touch operation according to the combined touch signal.

2. The apparatus of claim 1, **characterized in that**, the all-in-one switch is opened or closed according to instruction from a host (31) in a terminal device.

3. The apparatus of claim 1, **characterized in that**, the fingerprint identification sensor is formed of metallic nano-wire or carbon nano-tube material.

4. The apparatus of claim 1, **characterized in that**, the plurality of sub-sensors are arranged in a dot matrix or in a rectangular matrix.

5. The apparatus of claim 1, **characterized in that**, the fingerprint identification circuitry comprises:
a signal processing sub-module configured to convert the signal generated by a detection by the plurality of sub-sensors into digital signal and transmit the digital signal to a host (31) in a terminal device.

6. The apparatus of claim 1, **characterized in that**, the fingerprint identification circuitry comprises:
an image generation sub-module configured to create a fingerprint image based on the signal generated by a detection by the plurality of sub-sensors and transmit the fingerprint image to a host (31) in a terminal device.

7. The apparatus of claim 1, **characterized in that**, the fingerprint identification circuitry comprises:
a comparison sub-module configured to create a fingerprint image based on the signal generated by a detection by the plurality of sub-sensors, compare the fingerprint image with a sample image and transmit a comparison result to a host (31) in a terminal device.

8. The apparatus of claim 1, **characterized in that**, the touch screen circuitry comprises:
a determination sub-module configured to determine presence of the touch operation according to the combined touch signal and transmit a determination result to a host (31) in a terminal device.

9. A terminal device, **characterized in that**, the terminal device comprises the apparatus for implementing functions of touch screen and fingerprint identification according to anyone of claims 1-8.

## Patentansprüche

1. Vorrichtung zum Implementieren von Funktionen eines Berührungsbildschirms und einer Fingerabdruck-Identifikation, **dadurch gekennzeichnet, dass** sie umfasst:
einen Berührungsbildschirm,
einen Fingerabdruck-Identifikationssensor (21), eine Fingerabdruck-Identifikationsschaltung (22), einen All-in-One-Schalter (23) und eine Berührungsbildschirm-Schaltung (24), wobei
der Fingerabdruck-Identifikationssensor mehrere Subsensoren (42) umfasst, die mehreren Subsensoren jeweils mit der Fingerabdruck-Identifikationsschaltung verbunden sind und jeweils mit dem All-in-One-Schalter verbunden sind, der All-in-One-Schalter mit der Berührungsbildschirm-Schaltung verbunden ist,
der Fingerabdruck-Identifikationssensor unter einem Abdeckglas und in Belegung einer Sektion eines unteren Bereichs des Berührungsbildschirms vorgesehen und dazu ausgestaltet ist, wenn der All-in-One-Schalter geöffnet ist, jeweils ein Signal, das durch eine Erfassung durch die mehreren Subsensoren erzeugt wird, an die Fingerabdruck-Identifikationsschaltung zu übertragen, und wenn der All-in-One-Schalter geschlossen ist, das Signal, das durch eine Erfassung durch die mehreren Subsensoren erzeugt wird, durch den All-in-One-Schalter zu einem Berührungssignal zu kombinieren und das Berührungssignal an die Berührungsbildschirm-Schaltung zu übertragen, wobei die Funktionen der Fingerabdruck-Identifikation und des Berührungsbildschirms durch den Fingerabdruck-Identifikationssensor implementiert werden,
die Fingerabdruck-Identifikationsschaltung dazu ausgestaltet ist, das Signal zu verarbeiten, das durch eine Erfassung durch die mehreren Subsensoren erzeugt wird, und
die Berührungsbildschirm-Schaltung dazu ausgestaltet ist, ein Vorliegen eines Berührungsvorgangs gemäß dem kombinierten Berührungssignal festzustellen.

2. Vorrichtung nach Anspruch 1, **dadurch gekennzeichnet, dass** der All-in-One-Schalter gemäß Anweisung von einem Host (31) in einem Endgerät geöffnet oder geschlossen wird.

3. Vorrichtung nach Anspruch 1, **dadurch gekennzeichnet, dass** der Fingerabdruck-Identifikationssensor aus metallischem Nanodraht- oder Kohlenstoffnanoröhren-Material gebildet ist.

4. Vorrichtung nach Anspruch 1, **dadurch gekennzeichnet, dass** die mehreren Subsensoren in einer Punktmatrix oder in einer Rechteckmatrix angeordnet sind.

5. Vorrichtung nach Anspruch 1, **dadurch gekennzeichnet, dass** die Fingerabdruck-Identifikationsschaltung umfasst:
ein Signalverarbeitungs-Submodul, das dazu ausgestaltet ist, das Signal, das durch eine Erfassung durch die mehreren Subsensoren erzeugt wird, in ein digitales Signal umzuwandeln und das digitale Signal an einen Host (31) in einem Endgerät zu übertragen.

6. Vorrichtung nach Anspruch 1, **dadurch gekennzeichnet, dass** die Fingerabdruck-Identifikationsschaltung umfasst:
ein Bilderzeugungs-Submodul, das dazu ausgestaltet ist, ein Fingerabdruckbild basierend auf dem Signal zu erstellen, das durch eine Erfassung durch die mehreren Subsensoren erzeugt wird, und das Fingerabdruckbild an einen Host (31) in einem Endgerät zu übertragen.

7. Vorrichtung nach Anspruch 1, **dadurch gekennzeichnet, dass** die Fingerabdruck-Identifikationsschaltung umfasst:
ein Vergleichs-Submodul, das dazu ausgestaltet ist, ein Fingerabdruckbild basierend auf dem Signal zu erstellen, das durch eine Erfassung durch die mehreren Subsensoren erzeugt wird, das Fingerabdruckbild mit einem Musterbild zu vergleichen und ein Vergleichsergebnis an einen Host (31) in einem Endgerät zu übertragen.

8. Vorrichtung nach Anspruch 1, **dadurch gekennzeichnet, dass** die Berührungsbildschirm-Schaltung umfasst:
ein Feststellungs-Submodul, das dazu ausgestaltet ist, ein Vorliegen des Berührungsvorgangs gemäß dem kombinierten Berührungssignal festzustellen und ein Feststellungsergebnis an einen Host (31) in einem Endgerät zu übertragen.

9. Endgerät, **dadurch gekennzeichnet, dass** das Endgerät die Vorrichtung zum Implementieren von Funktionen eines Berührungsbildschirms und einer Fingerabdruck-Identifikation nach einem der Ansprüche 1 - 8 umfasst.

## Revendications

1. Appareil destiné à mettre en œuvre des fonctions d'identification d'empreinte digitale et d'écran tactile, **caractérisé en ce qu'**il comprend :
un écran tactile ;
un capteur d'identification d'empreinte digitale (21) ;
un montage de circuits d'identification d'empreinte digitale (22), un commutateur tout-en-un (23) et un montage de circuits d'écran tactile (24), dans lequel
le capteur d'identification d'empreinte digitale comprend une pluralité de sous-capteurs (42) ;
les sous-capteurs de la pluralité de sous-capteurs sont respectivement connectés au montage de circuits d'identification d'empreinte digitale, et sont respectivement connectés au commutateur tout-en-un ;
le commutateur tout-en-un est connecté au montage de circuits d'écran tactile ;
le capteur d'identification d'empreinte digitale est fourni sous un verre de recouvrement et occupe une partie d'une zone inférieure de l'écran tactile, et est configuré, lorsque le commutateur tout-en-un est à l'état ouvert, de manière à transmettre un signal généré dans le cadre d'une détection, effectuée par la pluralité de sous-capteurs, au montage de circuits d'identification d'empreinte digitale, respectivement, et lorsque le commutateur tout-en-un est à l'état fermé, de manière à combiner le signal généré dans le cadre d'une détection, effectuée par la pluralité de sous-capteurs, en un signal tactile, à travers le commutateur tout-en-un, et à transmettre le signal tactile au montage de circuits d'écran tactile, les fonctions d'identification d'empreinte digitale et d'écran tactile étant mises en oeuvre par le capteur d'identification d'empreinte digitale ;
le montage de circuits d'identification d'empreinte digitale est configuré de manière à traiter le signal généré dans le cadre d'une détection effectuée par la pluralité de sous-capteurs ; et
le montage de circuits d'écran tactile est configuré de manière à déterminer la présence d'une opération tactile selon le signal tactile combiné.

2. Appareil selon la revendication 1, **caractérisé en ce que** le commutateur tout-en-un est à l'état ouvert ou à l'état fermé selon une instruction provenant d'un hôte (31) dans un dispositif terminal.

3. Appareil selon la revendication 1, **caractérisé en ce que** le capteur d'identification d'empreinte digitale est formé d'un matériau en nanofil métallique ou en nanotube de carbone.

4. Appareil selon la revendication 1, **caractérisé en ce que** la pluralité de sous-capteurs est agencée dans une matrice de points ou dans une matrice rectangulaire.

5. Appareil selon la revendication 1, **caractérisé en ce que** le montage de circuits d'identification d'empreinte digitale comprend :
un sous-module de traitement de signal configuré de manière à convertir le signal généré dans le cadre d'une détection effectuée par la pluralité de sous-capteurs, en un signal numérique, et à transmettre le signal numérique à un hôte (31) dans un dispositif terminal.

6. Appareil selon la revendication 1, **caractérisé en ce que** le montage de circuits d'identification d'empreinte digitale comprend :
un sous-module de génération d'image configuré de manière à créer une image d'empreinte digitale sur la base du signal généré dans le cadre d'une détection effectuée par la pluralité de sous-capteurs, et à transmettre l'image d'empreinte digitale à un hôte (31) dans un dispositif terminal.

7. Appareil selon la revendication 1, **caractérisé en ce que** le montage de circuits d'identification d'empreinte digitale comprend :
un sous-module de comparaison configuré de manière à créer une image d'empreinte digitale sur la base du signal généré dans le cadre d'une détection effectuée par la pluralité de sous-capteurs, à comparer l'image d'empreinte digitale à une image d'échantillon, et à transmettre un résultat de comparaison à un hôte (31) dans un dispositif terminal.

8. Appareil selon la revendication 1, **caractérisé en ce que** le montage de circuits d'écran tactile comprend :
un sous-module de détermination configuré de manière à déterminer la présence de l'opération tactile selon le signal tactile combiné, et à transmettre un résultat de détermination à un hôte (31) dans un dispositif terminal.

9. Dispositif terminal, **caractérisé en ce que** le dispositif terminal comprend l'appareil destiné à mettre en œuvre des fonctions d'identification d'empreinte digitale et d'écran tactile selon l'une quelconque des revendications 1 à 8.
